(19) Europäisches Patentamt
European Patent Office
Office européen des brevets

(11) **EP 2 567 439 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **11748595.3**

(22) Anmeldetag: **08.07.2011**

(51) Int Cl.:
*G06Q 30/04* (2012.01)     *G06Q 50/06* (2012.01)
*H02J 3/14* (2006.01)     *H02J 13/00* (2006.01)

(86) Internationale Anmeldenummer:
**PCT/EP2011/061642**

(87) Internationale Veröffentlichungsnummer:
**WO 2012/019837 (16.02.2012 Gazette 2012/07)**

(54) **VERFAHREN ZUR RECHNERGESTÜTZTEN STEUERUNG DES ELEKTRISCHEN ENERGIEVERBRAUCHS EINER VIELZAHL VON ENERGIEVERBRAUCHERN IN EINEM ELEKTRISCHEN ENERGIENETZ**

METHOD FOR COMPUTER-AIDED CONTROL OF THE ELECTRICAL POWER CONSUMPTION OF A PLURALITY OF POWER CONSUMERS IN AN ELECTRICAL POWER GRID

PROCÉDÉ DE COMMANDE ASSISTÉE PAR ORDINATEUR DE LA CONSOMMATION D'ÉLECTRICITÉ DE PLUSIEURS CONSOMMATEURS D'ÉLECTRICITÉ DANS UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2010 DE 102010033756**

(43) Veröffentlichungstag der Anmeldung:
**13.03.2013 Patentblatt 2013/11**

(73) Patentinhaber: **Siemens Aktiengesellschaft
80333 München (DE)**

(72) Erfinder:
• **EGER, Kolja
85521 Ottobrunn (DE)**
• **GERDES, Christoph
81667 München (DE)**
• **VÖLKSEN, Gerd
80803 München (DE)**

(56) Entgegenhaltungen:
**AU-A1- 2004 229 818     US-A1- 2008 313 188
US-A1- 2009 089 595**

• **HORST F WEDDE ET AL: "Bottom-Up Self-Organization of Unpredictable Demand and Supply under Decentralized Power Management", SELF-ADAPTIVE AND SELF-ORGANIZING SYSTEMS, 2008. SASO '08. SECOND IEEE INTERNATIONAL CONFERENCE ON, IEEE, PISCATAWAY, NJ, USA, 20. Oktober 2008 (2008-10-20), Seiten 74-83, XP031355544, ISBN: 978-0-7695-3404-6**
• **GEERT DECONINCK ET AL: "A Robust Semantic Overlay Network for Microgrid Control Applications", 26 August 2008 (2008-08-26), ARCHITECTING DEPENDABLE SYSTEMS V; [LECTURE NOTES IN COMPUTER SCIENCE], SPRINGER BERLIN HEIDELBERG, BERLIN, HEIDELBERG, PAGE(S) 101 - 123, XP019103753, ISBN: 978-3-540-85570-5**

**Beschreibung**

Die Erfindung betrifft ein Verfahren zur rechnergestützten Steuerung des elektrischen Energieverbrauchs einer Vielzahl von Energieverbrauchern in einem elektrischen Energienetz sowie ein entsprechendes Energienetz und einen in dem Energienetz verwendbaren Energieverbraucher.

Im Rahmen der Verteilung der von einem Energiebereitsteller bereitgestellten elektrischen Energie in einem Energienetz sollten Lastspitzen vermieden werden, welche unter Umständen dazu führen können, dass der Energiebereitsteller die Energienachfrage der Energieverbraucher in dem Netz nicht mehr befriedigen kann. Aus dem Stand der Technik sind deshalb Ansätze bekannt, wie das Energieangebot eines Energiebereitstellers und die Energienachfrage von Energieverbrauchern aufeinander abgestimmt werden können. Üblicherweise werden hierbei zentrale Ansätze verwendet, bei denen Informationen zu dem Energieverbrauch der einzelnen Energieverbraucher zentral gesammelt werden und anschließend basierend auf diesen Informationen die Last geeignet verteilt wird. Diese Verfahren haben den Nachteil, dass zum einen eine große Menge an Informationen an eine zentrale Stelle zu übertragen sind und zum anderen diese Informationen vertrauenswürdige Daten darstellen, welche einen Rückschluss auf das Nutzerverhalten der die entsprechenden Energieverbraucher verwendenden Nutzer ermöglichen.

Das Dokument AU 2004 229 818 A1 offenbart ein Energienetz mit einer Vielzahl von lokalen Steuereinheiten, welche jeweils den Energiebedarf in einem Teilnetz überwachen und gegebenenfalls Energie von anderen Teilnetzen anfordern.

Die Druckschrift US 2009/089595 A1 offenbart eine Energieverwaltung in einem Computernetz unter Verwendung von lokalen Energie-Verwaltungs-Modulen, welche jeweils den Energieverbrauch von einem oder mehreren Computern steuern.

Das Dokument Horst F. Wedde et al: "Bottom-Up Self-Organization of Unpredictable Demand and Supply under Decentralized Power Management", Self-Adaptive and Self-Organizing Systems, 2008. SASO '08. SECOND IEEE INTERNATIONAL CONFERENCE ON, IEEE, Piscataway, NJ, USA, 20. Oktober 2008, Seiten 74-83, beschreibt die dezentrale Verteilung von Energie in einem Energienetz basierend auf der Verhandlung von Energiepreisen. In der Druckschrift US 2008/313188 A1 wird der Austausch von lokalen Informationen zwischen Peers eines dezentralen Netzes und eine darauf basierende Abschätzung einer Zufallsvariablen beschrieben.

Das Dokument "A Robust Semantic Overlay Network for Microgrid Control Applications" von Geert Deconinck et al., Architecting Dependable Systems V, LNCS 5135, S. 101-123, 26.08.2008, Springer Verlag Heidelberg, offenbart ein Steuersystem für ein elektrisches Energienetz aus intelligenten Verbrauchern, die untereinander auf Basis eines Gossip-Algorithmus Informationen austauschen können, um einen Gesamtenergieverbrauch des Energienetzes zu berechnen.

Aufgabe der Erfindung ist es, ein Verfahren zur rechnergestützten Steuerung des elektrischen Energieverbrauchs einer Vielzahl von Energieverbrauchern in einem elektrischen Energienetz zu schaffen, welches eine geeignete Koordination des Energieverbrauchs der Verbraucher mit möglichst geringem Datenaufkommen ermöglicht.

Diese Aufgabe wird durch das Verfahren gemäß Patentanspruch 1 bzw. das Energienetz gemäß Patentanspruch 14 bzw. den Netzknoten gemäß Patentanspruch 15 gelöst. Weiterbildungen der Erfindung sind in den abhängigen Ansprüchen definiert.

Das erfindungsgemäße Verfahren dient zur rechnergestützten Steuerung des elektrischen Energieverbrauchs einer Vielzahl von Energieverbrauchern in einem elektrischen Energienetz, wobei die Energieverbraucher Netzknoten eines dezentralen Kommunikationsnetzes aus einer Vielzahl von Netzknoten darstellen. In diesem Kommunikationsnetz können die Energieverbraucher untereinander kommunizieren. Das dezentrale Kommunikationsnetz mit den einzelnen Energieverbrauchern als Netzknoten kann dabei mit an sich bekannten Verfahren realisiert sein, beispielsweise basierend auf bekannten Peer-to-Peer-Protokollen.

In einem Schritt a) des erfindungsgemäßen Verfahrens schätzen die Netzknoten jeweils basierend auf dem Austausch von Informationen mit zumindest einem anderen Netzknoten den Gesamtenergieverbrauch der Vielzahl von Netzknoten ab. Erfindungsgemäß erfolgt der Austausch von Informationen jeweils zwischen einer vorgegebenen Anzahl von Netzknoten, indem ein jeweiliger Netzknoten in vorbestimmten zeitlichen Abständen zumindest einen Netzknoten aus der Menge der ihm bekannten Netzknoten auswählt, um basierend auf dem Austausch von Informationen mit dem zumindest einen ausgewählten Netzknoten den Gesamtenergieverbrauch der Vielzahl von Netzknoten abzuschätzen. Dabei wird der zumindest eine Netzknoten zufällig gewählt. Auf diese Weise wird erreicht, dass die Schätzung des Gesamtenergieverbrauchs in jedem Netzknoten möglichst aktuell ist. Die vorgegebene Anzahl besteht in einer besonders bevorzugten Variante aus einem Paar von Netzknoten.

Erfindungsgemäß übermittelt ein jeweiliger Netzknoten der vorgegebenen Anzahl einen von ihm geschätzten Durchschnittsenergieverbrauch eines einzelnen Netzknotens im Kommunikationsnetz oder eine Größe, aus welcher der Durchschnittsenergieverbrauch ableitbar ist, an die anderen Netzknoten der vorgegebenen Anzahl. Der Durchschnittsenergieverbrauch stellt dabei einen mittleren Energieverbrauch für jeden Netzknoten in dem Netz dar. Dabei aktualisiert ein jeweiliger Netzknoten der vorgegebenen Anzahl seinen geschätzten Durchschnittsenergieverbrauch unter Berücksichtigung aller Durchschnittsenergieverbräuche der Netzknoten der vorgegebenen Anzahl und bestimmt daraus einen aktualisierten geschätzten Gesamtenergieverbrauch der Vielzahl von Netzknoten. Der aktualisierte Durchschnittsenergieverbrauch für einen jeweiligen Netzknoten der vorgegebenen Anzahl ist dabei vorzugsweise der arithmetische Mittelwert der Durchschnittsenergieverbräuche aller Netzknoten der vorgegebenen Anzahl.

Gemäß einem Schritt b) vergleicht ein jeweiliger Netzknoten, dessen Energiebedarf sich um eine benötigte Energiemenge erhöht, den von ihm geschätzten Gesamtenergieverbrauch zuzüglich der benötigten Energiemenge mit einem vorgegebenen Gesamtenergiebedarf der Vielzahl von Netzknoten und veranlasst daraufhin einen Bezug der benötigten Energiemenge von einem Energiebereitsteller, wenn sein geschätzter Gesamtenergieverbrauch zuzüglich der benötigten Energiemenge um zumindest einen vorbestimmten Schwellwert kleiner als der vorgegebene Gesamtenergiebedarf ist. Die im Vorangegangenen mit Schritt a) und b) bezeichneten Merkmale des Verfahrens stellen dabei keine feste zeitliche Reihenfolge dar, in welcher die entsprechenden Merkmale ausgeführt werden.

Das erfindungsgemäße Verfahren ermöglicht in einfacher Weise eine Anpassung des Energiebezugs von einzelnen Energieverbrauchern durch einen dezentralen Austausch von Informationen zwischen den Energieverbrauchern, ohne dass Informationen zum Energiebedarf der einzelnen Verbraucher in einer zentralen Stelle gesammelt werden müssen. Das Verfahren zeichnet sich somit zum einen durch Datensparsamkeit und zum anderen durch einen Schutz von vertrauenswürdigen Informationen betreffend den Energiebedarf der einzelnen Energieverbraucher aus. Erfindungsgemäß wird ein rein dezentraler Ansatz zur Steuerung des Energiebedarfs auf Seiten der Verbraucher geschaffen, um hierdurch den Gesamtenergieverbrauch an einen vorgesehenen Gesamtenergiebedarf anzupassen. Der Gesamtenergiebedarf ist dabei beispielsweise durch ein Lastprofil gegeben, das den zeitlichen Verlauf der im Energienetz bereitzustellenden Gesamtenergie spezifiziert. Das Lastprofil beschreibt somit die Kapazität an Energie, die ein Energiebereitsteller zu entsprechenden Zeitpunkten maximal bereitstellen kann bzw. maximal bereitstellen möchte. Durch die Wahl eines geeigneten vorbestimmten Schwellwerts, z.B. als prozentualer Wert des vorgegebenen Gesamtenergiebedarfs, kann dabei sichergestellt werden, dass der Gesamtenergieverbrauch immer unterhalb des vorgegebenen Gesamtenergiebedarfs liegt. Gegebenenfalls kann der vorbestimmte Schwellwert auch auf Null gesetzt werden, so dass ein Energiebezug immer dann veranlasst wird, wenn der von einem Netzknoten geschätzte Gesamtenergieverbrauch zuzüglich der benötigten Energiemenge kleiner gleich dem vorgegebenen Gesamtenergiebedarf ist.

In einer bevorzugten Ausführungsform des erfindungsgemäßen Verfahrens wiederholt der jeweilige Netzknoten im Falle, dass sein geschätzter Gesamtenergieverbrauch zuzüglich der benötigten Energiemenge nicht um zumindest den vorbestimmten Schwellwert kleiner als der vorgegebene Gesamtenergiebedarf ist, nach einem vorbestimmten Zeitintervall den Schritt b). Auf diese Weise wird sichergestellt, dass der Netzknoten die von ihm benötigte zusätzliche Energie zu späteren Zeitpunkten erhalten kann. Die Länge des vorbestimmten Zeitinvervalls wird in einer weiteren Ausgestaltung des erfindungsgemäßen Verfahrens nach jeder Wiederholung des Schritts b) verlängert, beispielsweise verdoppelt. Hierdurch wird eine gleichmäßige Lastverteilung auf die Netzknoten erreicht, wenn eine große Anzahl von Netzknoten Energie von dem Energiebereitsteller benötigt.

In einer weiteren Ausgestaltung des erfindungsgemäßen Verfahrens nimmt der jeweilige Netzknoten nach einer vorbestimmten Anzahl von Wiederholungen des Schritts b) nicht mehr am Verfahren teil. Das heißt, der jeweilige Netzknoten verlässt das dezentrale Netz und kann dann seine Energie auf andere Weise von dem Energiebereitsteller oder einem anderen Energiebereitsteller, beispielsweise zu erhöhten Preisen, beziehen. Auf diese Weise wird sichergestellt, dass ein Energieverbraucher nicht zu lange Zeit auf eine benötigte Energiemenge warten muss.

In einer weiteren Variante des erfindungsgemäßen Verfahrens übermittelt ein jeweiliger Netzknoten der vorgegebenen Anzahl eine von ihm geschätzte Gesamtanzahl von Netzknoten in dem Kommunikationsnetz oder eine Größe, aus der die geschätzte Gesamtanzahl ableitbar ist, an die anderen Netzknoten der vorgegebenen Anzahl, wobei ein jeweiliger Netzknoten der vorgegebenen Anzahl seine geschätzte Gesamtanzahl unter Berücksichtigung aller Gesamtanzahlen der Netzknoten der vorgegebenen Anzahl aktualisiert und anschließend basierend auf einer Multiplikation des von ihm geschätzten und aktualisierten Durchschnittsenergieverbrauchs mit der aktualisierten Gesamtanzahl den geschätzten Gesamtenergieverbrauch der Vielzahl von Netzknoten aktualisiert. Hierdurch kann das Verfahren in geeigneter Weise in dezentralen Netzen eingesetzt werden, in denen die einzelnen Netzknoten nicht wissen, wie groß die Gesamtanzahl der Netzknoten in dem Netz ist.

In einer bevorzugten Variante des soeben beschriebenen Ausführungsbeispiels übermittelt ein jeweiliger Netzknoten der vorgegebenen Anzahl seine geschätzte Gesamtanzahl von Netzknoten oder den Reziprokwert seiner geschätzten Gesamtanzahl von Netzknoten an die anderen Netzknoten der vorgegebenen Anzahl, wobei sich die aktualisierte Gesamtanzahl von Netzknoten für einen jeweiligen Netzknoten der vorgegebenen Anzahl aus dem Reziprokwert der durch die vorgegebene Anzahl geteilten Summe der Reziprokwerte der geschätzten Gesamtanzahlen aller Netzknoten der vorgegebenen Anzahl ergibt. Auf diese Weise wird eine geeignete Mittelung der Gesamtanzahl zwischen den Netzknoten der vorgegebenen Anzahl erreicht.

In einer weiteren Ausführungsform des erfindungsgemäßen Verfahrens vermindert ein jeweiliger Netzknoten dann, wenn er seinen Energieverbrauch beim Energiebereitsteller um eine Energiemenge reduziert, seinen geschätzten Durchschnittsenergieverbrauch um diese Energiemenge. Hierdurch wird sichergestellt, dass auch Verbrauchsverminderungen in geeigneter Weise bei der Schätzung des Durchschnittsenergieverbrauchs berücksichtigt werden. Analog setzt ein jeweiliger Netzknoten vorzugsweise auch dann, wenn er einen Bezug einer benötigten Energiemenge von dem Energiebereitsteller veranlasst, seinen geschätzten Durchschnittsenergieverbrauch um die benötigte Energiemenge herauf.

Das erfindungsgemäße Verfahren kann in beliebigen Arten von Energienetzen eingesetzt werden. Insbesondere sind die einzelnen, entsprechende Netzknoten repräsentierende Energieverbraucher jeweils eine Energieverbrauchseinheit und/oder eine Gruppe von Energieverbrauchseinheiten, beispielsweise die Energieverbrauchseinheiten eines Haushalts. Das erfindungsgemäße Verfahren eignet sich insbesondere zur Verteilung von elektrischer Energie unter Energieverbrauchseinheiten, welche derart ausgestaltet sind, dass der Bezug einer durch die Energieverbrauchseinheit benötigte Energiemenge ohne wesentliche Beeinträchtigung der Funktion der Energieverbrauchseinheit aufgeschoben werden kann. Dies ist beispielsweise für Klimaanlagen oder Verbrauchseinheiten zum Bezug von elektrischer Energie für Elektrofahrzeuge der Fall.

Analog zu den Energieverbrauchern kann auch der Energiebereitsteller in dem erfindungsgemäßen Verfahren beliebig ausgestaltet sein. Es kann sich dabei um einen oder mehrere Energieerzeuger und/oder einen oder mehrere Energiezwischenhändler handeln.

Neben dem oben beschriebenen Verfahren umfasst die Erfindung ferner ein Energienetz mit einer Vielzahl von Energieverbrauchern, wobei die Energieverbraucher Netzknoten eines dezentralen Kommunikationsnetzes aus einer Vielzahl von Netzknoten darstellen, in dem die Energieverbraucher untereinander kommunizieren können. Die Netzknoten in dem Energienetz sind dabei derart ausgestaltet, dass das oben beschriebene erfindungsgemäße Verfahren bzw. eine oder mehrere Varianten dieses Verfahrens in dem Energienetz ausführbar ist.

Die Erfindung betrifft darüber hinaus einen Netzknoten, der derart ausgestaltet ist, dass er in dem oben beschriebenen dezentralen Kommunikationsnetz fungieren kann und somit die entsprechenden Schritte des erfindungsgemäßen Verfahrens bzw. einer oder mehrerer Varianten dieses Verfahrens ausführen kann.

Ausführungsbeispiele der Erfindung werden nachfolgend anhand der beigefügten Figuren detailliert beschrieben.

Es zeigen:

Fig. 1 eine schematische Darstellung eines elektrischen Energienetzes, in dem eine Variante des erfindungsgemäßen Verfahrens durchgeführt wird; und

Fig. 2 zwei Diagramme, welche einen mit dem erfindungsgemäßen Verfahren gesteuerten Energieverbrauch mit einem Energieverbrauch ohne erfindungsgemäße Steuerung vergleichen.

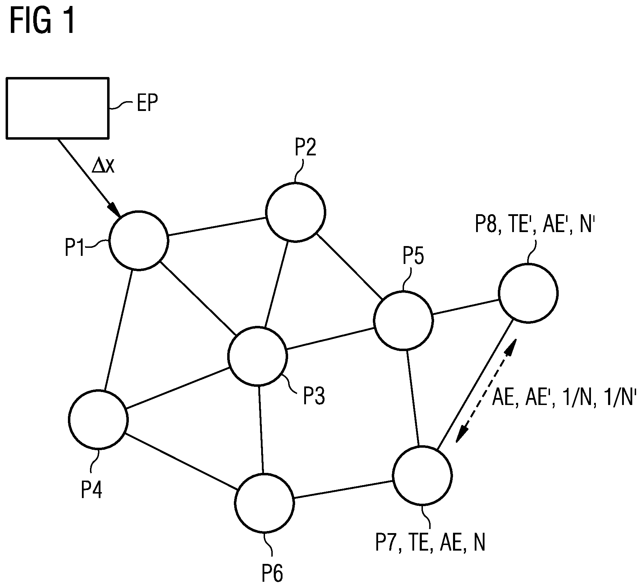

Fig. 1 zeigt in schematischer Darstellung ein elektrisches Energienetz, beispielsweise in der Form eines sog. Smart-Grids, in dem der Energieverbrauch einer Vielzahl von Energieverbrauchern mittels einer Ausführungsform des erfindungsgemäßen Verfahrens gesteuert wird. Zur Realisierung der erfindungsgemäßen Steuerung sind die Energieverbraucher untereinander über ein dezentrales Kommunikationsnetz miteinander vernetzt und stellen in diesem Sinne Netzknoten bzw. Peers des Kommunikationsnetzes dar. In Fig. 1 ist ein Energienetz mit insgesamt acht Verbrauchern P1, P2, ..., P8 gezeigt, welche entsprechende Knoten im Kommunikationsnetz sind, wobei die zwischen den einzelnen Netzknoten existierenden Kommunikationsverbindungen des Netzes mittels durchgezogener Linien zwischen den Peers angedeutet sind. Das Kommunikationsnetz ist dabei ein vermaschtes Netz, wobei jeder Peer in dem Netz eine bestimmte Anzahl von anderen Peers kennt. Einem jeweiligen Peer ist jedoch nicht die Gesamtanzahl der acht Peers in dem Kommunikationsnetz bekannt. Das in Fig. 1 dargestellte dezentrale Netz kann dabei mit an sich bekannten Verfahren zwischen den Peers ausgebildet werden, beispielsweise basierend auf dem bekannten Chord-Ring oder anderen Peer-to-Peer-Protokollen. Das dargestellte Energienetz dient nur zur Verdeutlichung des erfindungsgemäßen Verfahrens. In realen Anwendungen umfasst das Netz wesentlich mehr als acht Peers (z.B. 1000 und mehr Peers).

Die einzelnen Peers stellen in einer bevorzugten Variante einzelne intelligente Stromverbraucher dar, welche über eine entsprechende Software bzw. Hardware verfügen, um mit anderen Peers in dem Netz basierend auf dem erfindungsgemäßen Verfahren kommunizieren zu können. Es handelt sich dabei vorzugsweise um Stromverbraucher, bei denen ein Bezug von elektrischer Energie in einem gewissen Zeitrahmen auch aufgeschoben werden kann, ohne die Funktion des Stromverbrauchers wesentlich zu beeinträchtigen. Beispiele solcher Stromverbraucher sind Klimaanlagen oder Kontrolleinheiten zum Bezug von elektrischem Strom für Elektrofahrzeuge. Die entsprechenden Kontrolleinheiten können dabei als intelligente Stromverbraucher im Elektrofahrzeug selbst oder auch in der entsprechenden Ladestation zum Laden des Elektrofahrzeugs integriert sein. Gegebenenfalls besteht auch die Möglichkeit, dass die einzelnen Peers einen Zusammenschluss von mehreren Energieverbrauchsgeräten darstellen, z.B. kann sich ein Peer auf alle bzw. einen Teil der Energieverbrauchsgeräte in einem privaten Haushalt oder in einem Unternehmen beziehen.

In dem Energienetz der Fig. 1 beziehen alle Peers ihre elektrische Energie von einem Energiebereitsteller EP, wobei beispielhaft der Bezug einer um den Wert $\Delta x$ erhöhten Energiemenge von dem Peer P1 durch einen durchgezogenen Pfeil angedeutet ist. Der Energiebereitsteller EP kann dabei verschieden ausgestaltet sein. Insbesondere kann es sich um einen Kraftwerksbetreiber bzw. um den Betreiber eines virtuellen Kraftwerks handeln, der eine Vielzahl von Energielieferanten gemeinsam verwaltet. Ebenso kann der Energiebereitsteller EP durch einen sog. Aggregator realisiert sein, der die bereitgestellte elektrische Energie von mehreren Stromlieferanten bzw. Erzeugern aggregiert und die Koordination der Energiebereitstellung an das Energienetz übernimmt.

Bei der Durchführung des Verfahrens zur Energieverteilung in dem Energienetz der Fig. 1 existiert keine zentrale Instanz, welche die von den einzelnen Peers benötigte Energiemengen sammelt und basierend darauf die Energieverteilung an die Peers steuert. Vielmehr regeln die einzelnen Peers untereinander ihren Energiebezug. Ein Peer, der im Rahmen des Verfahrens eine von ihm benötigte Energiemenge beziehen darf, ruft diese Energiemenge von dem Energiebereitsteller EP ab. Dem Energiebereitsteller ist dabei nicht bekannt, wie der aktuelle Energieverbrauch in den einzelnen Energieverbrauchern ist und ferner hat der Energiebereitsteller nicht die Möglichkeit, Statusinformationen bezüglich des Energieverbrauchs der einzelnen Peers zu sammeln und auszuwerten. Insbesondere werden im Rahmen des Verfahrens keine Informationen über den Energieverbrauch bzw. das Verhalten der Nutzer der einzelnen Energieverbraucher an den Energiebereitsteller übermittelt.

Das im Folgenden erläuterte erfindungsgemäße Verfahren lehnt sich an Verfahren an, welche im Rahmen der Verteilung von Information in Computernetzen unter dem Begriff des "Gossiping" bekannt sind. Dabei tauschen in Zeitabständen Paare von Peers untereinander Informationen aus. In der hier beschriebenen Variante wählt jeder der Peers P1 bis P8 nach einem vorgegebenen Zeitintervall $T_G$ zufällig einen anderen Peer aus dem dezentralen Netz aus, mit dem er entsprechende Informationen austauscht. Der Austausch der Informationen ist in Fig. 1 beispielhaft für das Paar aus Peers P7 und P8 angedeutet. Wie weiter unten noch näher erläutert wird, schätzt jeder einzelne Peer für sich den aktuellen Gesamtenergieverbrauch von allen Peers im Netz basierend auf einem geschätzten Durchschnittsenergieverbrauch und einer geschätzten Gesamtanzahl aller Peers im Netz. Diese Gesamtanzahl ist den einzelnen Peers nicht bekannt, da nicht jeder Peer alle Peers in dem Netz kennt. In Fig. 1 ist der durch den Peer P7 geschätzte Gesamtenergieverbrauch mit Bezugszeichen TE, sein geschätzter Durchschnittsenergieverbrauch mit Bezugszeichen AE sowie seine geschätzte Gesamtanzahl an Peers mit Bezugszeichen N angedeutet. Analog ist der durch den Peer P8 geschätzte Gesamtenergieverbrauch mit Bezugszeichen TE', sein geschätzter Durchschnittsenergieverbrauch mit Bezugszeichen AE' sowie seine geschätzte Gesamtanzahl an Peers mit Bezugszeichen N' angedeutet.

Im Rahmen der Kommunikation zwischen den beiden Peers P7 und P8 wird der geschätzte Gesamtenergieverbrauch beider Peers aktualisiert, wobei hierfür der Peer P7 den von ihm geschätzten Durchschnittsverbrauch AE an den Knoten P8 übermittelt, der wiederum den entsprechend von ihm geschätzten Durchschnittsverbrauch AE' an den Peer P7 übermittelt. Ferner übermittelt der Peer P7 den Reziprokwert seiner geschätzten Gesamtanzahl 1/N an Peer P8, der analog den von ihm geschätzten Reziprokwert 1/N' an den Peer P7 übermittelt. Basierend auf den in den Peers empfangenen Informationen erfolgt dann die Aktualisierung des geschätzten Gesamtenergieverbrauchs TE bzw. TE', wie im Folgenden detailliert erläutert wird.

In der nachfolgenden Beschreibung wird allgemein ein Informationsaustausch zwischen einem Peer Pi und einem Peer Pj aus der Menge der Peers im Kommunikationsnetz erläutert. Dabei wird der Schätzwert eines Peers Pi über den Gesamtverbrauch, der in Fig. 1 mit TE bzw. TE' bezeichnet ist, nunmehr mit $\hat{y}_i$ bezeichnet. Ferner wird die vom entsprechenden Peer Pi geschätzte Gesamtanzahl von Peers, welche in Fig. 1 mit N bzw. N' bezeichnet ist, nunmehr mit $\hat{N}_i$ bezeichnet. Darüber hinaus wird für den Durchschnittsenergieverbrauch eines Peers Pi, der in Fig. 1 mit AE bzw. AE' bezeichnet ist, nunmehr die Variable $\hat{y}_i^{ave}$ verwendet.

Im Rahmen der Initialisierung des Verfahrens werden zunächst einige Peers, die Energie von dem Energiebereitsteller EP beziehen möchten, bei dem Energiebereitsteller registriert, wobei die Peers gleichzeitig untereinander mit einem entsprechenden Protokoll ein dezentrales Datennetz aufbauen. Im Rahmen der zeitlichen Reihenfolge der Registrierung erhält dabei jeder Peer einen entsprechenden Index i, wobei sich jeder der Peers Pi zu einem Zeitpunkt t der Initialisierung mit den folgenden Werten für den Durchschnittsverbrauch bzw. den Reziprokwert der Gesamtanzahl der Peers initialisiert:

$$\hat{y}_i^{ave}(t) = 0 \ ,$$

$$\frac{1}{\hat{N}_i(t)} = \begin{cases} 1 & \text{falls Pi erster Peer (d.h. Pi=P1)} \\ 0 & \text{sonst} \end{cases} \ .$$

Im Rahmen des Gossiping-Prozesses werden die einzelnen Schätzwerte in dem jeweiligen Peer Pi in vorbestimmten Zeitabständen $T_G$ aktualisiert. Zur Aktualisierung wählt dabei der entsprechende Peer Pi einen anderen, ihm bekannten Peer des Kommunikationsnetzes aus, der im Folgenden mit Pj bezeichnet wird. Dabei sendet der Peer Pi die von ihm geschätzten Werte $\hat{y}_i^{ave}$ und $\frac{1}{\hat{N}_i}$ an den anderen Peer Pj. Nach Empfang dieser Werte sendet der Peer Pj seine von ihm geschätzten Werte $\hat{y}_j^{ave}$ und $\frac{1}{\hat{N}_j}$ an den Peer Pi. Nach Empfang dieser Werte sendet der Peer Pi eine Bestätigung zurück, mit der er quittiert, dass der Empfang der Werte erfolgreich war. Anschließend erfolgt in Peer Pi eine Aktualisierung des Durchschnittsenergieverbrauchs $\hat{y}_i^{ave}$ sowie der Gesamtanzahl an Peers $\hat{N}_i$ zum Zeitpunkt t+1. Die Aktualisierung des Durchschnittsenergieverbrauchs basiert dabei auf einer Mittelwertbildung der in den Peers Pi und Pj geschätzten Durchschnittsenergieverbräuche und lautet wie folgt:

$$\hat{y}_i^{ave}\left(t+1\right) = \frac{1}{2}\left(\hat{y}_i^{ave} + \hat{y}_j^{ave}\right).$$

Die Aktualisierung der Gesamtanzahl an Peers zum Zeitpunkt t+1 erfolgt über eine entsprechende Mittelwertbildung der Reziprokwerte der in den Peers Pi und Pj geschätzten Gesamtanzahlen und lautet wie folgt:

$$\frac{1}{\hat{N}_i}\left(t+1\right) = \frac{\frac{1}{\hat{N}_i} + \frac{1}{\hat{N}_j}}{2}.$$

Basierend auf einer Multiplikation der aktualisierten geschätzten Gesamtanzahl mit dem aktualisierten geschätzten Durchschnittsverbrauch ergibt sich dann für den Peer Pi ein neuer Schätzwert des Gesamtverbrauchs an Energie in dem Netz wie folgt:

$$\hat{y}_i\left(t+1\right) = \hat{y}_i^{ave}\left(t+1\right) \cdot \hat{N}_i\left(t+1\right).$$

Nachdem der Peer Pj die oben beschriebene Bestätigung vom Peer Pi empfängt, aktualisiert er seine Variablen in gleicher Weise wie der Peer Pi, d.h. es ergeben sich folgende neue Werte für die aktualisierten Variablen:

$$\hat{y}_j^{ave}\left(t+1\right) = \frac{1}{2}\left(\hat{y}_i^{ave} + \hat{y}_j^{ave}\right),$$

$$\frac{1}{\hat{N}_j}\left(t+1\right) = \frac{\frac{1}{\hat{N}_i} + \frac{1}{\hat{N}_j}}{2},$$

und

$$\hat{y}_j\left(t+1\right) = \hat{y}_j^{ave}\left(t+1\right) \cdot \hat{N}_j\left(t+1\right).$$

Um nunmehr den oben beschriebenen Schätzwert für den Gesamtenergieverbrauch in geeigneter Weise bei Bezug von Energie von dem Energiebereitsteller EP zu berücksichtigen, ist in jedem der einzelnen Peers ein vorgegebener Energiebedarf in der Form eines Lastprofils hinterlegt, welches für einen vorbestimmten Zeitraum einen vorgegebenen Gesamtenergiebedarf der Peers in dem Kommunikationsnetz wiedergibt, beispielsweise für einen Tag oder einen längeren oder kürzeren Zeitraum. Das Lastprofil kann z.B. auf einer zeitlichen Prognose des Energiebedarfs der Peers in dem Netz basieren. Gegebenenfalls kann das Lastprofil auch basierend auf einer geeigneten Vorgabe gewählt werden, gemäß der ein Energiebereitsteller dem Netz aus Peers elektrische Energie bereitstellen möchte. Das Lastprofil wird im Folgenden mit $Y^{target}$ bezeichnet.

Ein Peer in dem Netz, der zusätzlich zu seinem aktuellen Energieverbrauch eine weitere Energiemenge $\Delta x$ von dem Energiebereitsteller EP beziehen möchte, vergleicht zunächst den von ihm aktuell geschätzten Gesamtenergieverbrauch zuzüglich der weiteren Energiemenge mit dem aktuellen Energiebedarf gemäß dem Lastprofil. Falls die Summe aus geschätztem Gesamtenergieverbrauch und weiterer Energiemenge $\Delta x$ kleiner oder genauso groß wie der Energiebedarf gemäß dem Lastprofil ist, veranlasst der Peer den Bezug der weiteren Energiemange $\Delta x$ beim Energiebereitsteller, indem er seine Last entsprechend erhöht. Darüber hinaus aktualisiert der entsprechende Peer seinen geschätzten Durchschnittsenergieverbrauch auf einen neuen Wert, der sich aus dem aktuellen Durchschnittsenergieverbrauch zuzüglich der weiteren Energiemenge ergibt. Mathematisch lässt sich somit für einen Peer Pi der Bezug einer weiteren Energiemenge $\Delta x$ wie folgt beschreiben:

$$\text{Falls} \quad \left( \hat{y}_i + \Delta x \leq Y^{target} \right) \Rightarrow$$

$$x_i\left(t+1\right) = x_i\left(t\right) + \Delta x$$

$$\hat{y}_i^{ave}\left(t+1\right) = \hat{y}_i^{ave}\left(t\right) + \Delta x .$$

Dabei bezeichnet $x_i(t)$ die aktuelle Energiemenge, die der Peer Pi vom Energiebereitsteller bezeiht. Dieser Wert wird auf $x_i(t+1)$ aktualisiert. Im Falle, dass obige Bedingung nicht erfüllt ist, d.h. wenn die Summe aus geschätztem Gesamtenergiebedarf zuzüglich der weiteren Energiemenge größer als das Lastprofil ist, wird nach einem vorbestimmten Zeitintervall $T_R$ nochmals versucht, die weitere Energiemenge zu beziehen. In einer speziellen Variante werden dabei die Zeitintervalle $T_R$ nach jedem erfolglosen Energiebezug verlängert, beispielsweise verdoppelt. Dabei können Lastspitzen, bei denen gleichzeitig eine große Anzahl an Peers mehr Energie von dem Energiebereitsteller EP benötigt, geeignet berücksichtigt werden.

Um in dem obigen Verfahren auch eine Verminderung des Energieverbrauchs $x_i(t)$ zu berücksichtigen, wird bei einer solchen Verminderung der Energiebezug beim Energiebereitsteller entsprechend herabgesetzt und ferner der Schätzwert des Durchschnittverbrauchs vermindert. Dies kann mathematisch durch folgende Gleichungen beschrieben werden:

$$x_i\left(t+1\right) = x_i\left(t\right) - \Delta x ,$$

$$\hat{y}_i^{ave}\left(t+1\right) = \hat{y}_i^{ave}\left(t\right) - \Delta x .$$

Wie sich aus den obigen Ausführungen ergibt, wird mit dem erfindungsgemäßen Verfahren ein dezentraler Bezug von elektrischer Energie von einem Energiebereitsteller erreicht, ohne dass dieser Energieverbrauchsdaten der einzelnen Peers sammeln muss. Stattdessen werden nur aggregierte Informationen ausgetauscht. Somit sind keine Rückschlüsse zum Nutzverhalten bezüglich des Energieverbrauchs durch den Energiebereitsteller möglich. Ein weiterer Vorteil des Verfahrens liegt in der Datensparsamkeit.

Das Verfahren eignet sich insbesondere zur dezentralen Verwaltung einer großen Anzahl von Energieverbrauchern, beispielsweise in der Größenordnung von einigen tausend Verbrauchern. Dabei müssen nicht alle Funktionen in dem Energienetz dezentral realisiert werden. Bestimmte Funktionen, wie z.B. die Vertragsabschließung und Abrechung, können auch auf zentralen Servern bearbeitet werden. Demgegenüber wird für die rechen- und bandbreitenintensive Aufgabe der Statusüberwachung des Energiebezugs der einzelnen Peers der oben beschriebene verteilte Ansatz verwendet.

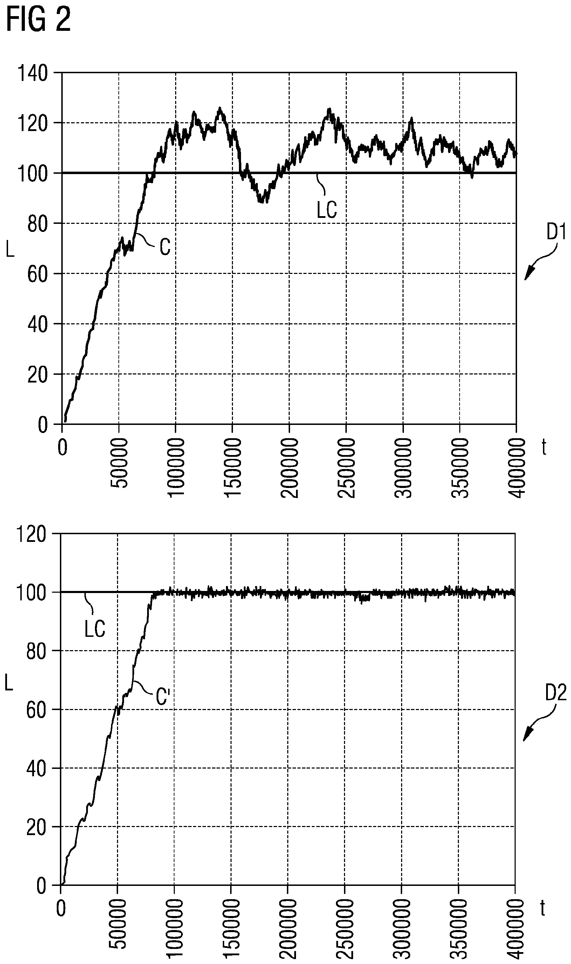

Die Erfinder haben das Verfahren basierend auf Simulationen getestet, was in den Diagrammen D1 und D2 der Fig. 2 wiedergegeben ist. Es wurden dabei für eine Vielzahl von Zeitschritten, welche entlang der Abszisse t der beiden Diagramme D1 und D2 wiedergegeben sind, zufällig durch die einzelnen Peers vorbestimmte weitere Energiemengen von dem Energiebereitsteller bezogen bzw. der Energiebedarf entsprechend herabgesetzt, wobei die sich daraus ergebende Gesamtlast L in dem Diagramm D1 durch die Kurve C und in dem Diagramm D2 durch die Kurve C' wiedergegeben ist. In den Diagrammen ist ferner eine vorgegebene Lastkurve LC eingezeichnet, welche im Rahmen der Simulation durch das erfindungsgemäße Verfahren berücksichtigt wurde. In dem Diagramm D1 wurde die Last ohne Verwendung des erfindungsgemäßen Verfahrens gesteuert, wohingegen im Diagramm D2 das erfindungsgemäße Verfahren eingesetzt wurde. Man erkennt deutlich, dass sich in dem Diagramm D2 nach einer Initialisierungsphase die Gesamtlast sehr gut an die vorgegebene Lastkurve LC anpasst. Im Gegensatz dazu kommt es in dem Diagramm D1 zu Überschreitungen bzw. Unterschreitungen der Lastkurve LC. Um gegebenenfalls sicherzustellen, dass im Diagramm D2 zu keinem Zeitpunkt ein Überschreiten der Lastkurve LC auftritt, kann in einer Variante des erfindungsgemäßen Verfahrens ein Lastbezug auch derart geregelt sein, dass der Bezug einer weiteren Energiemenge nur dann zugelassen wird, wenn der geschätzte Gesamtenergieverbrauch zuzüglich der weiteren Energiemenge um einen vorbestimmten positiven Schwellwert kleiner als das Lastprofil ist.

**Patentansprüche**

1. Verfahren zur rechnergestützten Steuerung des elektrischen Energieverbrauchs einer Vielzahl von Energieverbrauchern in einem elektrischen Energienetz, wobei die Energieverbraucher Netzknoten (P1, P2, ..., P8) eines dezentrales Kommunikationsnetzes aus einer Vielzahl von Netzknoten (P1, P2, ..., P8) darstellen, in dem die Energieverbraucher untereinander kommunizieren können, wobei:

   a) die Netzknoten (P1, P2, ..., P8) jeweils basierend auf dem Austausch von Informationen mit zumindest einem anderen Netzknoten (P1, P2, ..., P8) den Gesamtenergieverbrauch (TE, TE') der Vielzahl von Netzknoten (P1, P2, ..., P8) abschätzen,
   wobei der Austausch von Informationen jeweils zwischen einer vorgegebenen Anzahl von Netzknoten (P1, P2, ..., P8) erfolgt, indem ein jeweiliger Netzknoten (P1, P2, ..., P8) in vorbestimmten zeitlichen Abständen zumindest einen Netzknoten aus der Menge der ihm bekannten Netzknoten (P1, P2, ..., P8) zufällig auswählt, um basierend auf den Austausch von Informationen mit dem zumindest einen ausgewählten Netzknoten (P1, P2, ..., P8) den Gesamtenergieverbrauch (TE, TE') der Vielzahl von Netzknoten (P1, P2, ..., P8) abzuschätzen; wobei ein jeweiliger Netzknoten (P1, P2, ..., P8) der vorgegebenen Anzahl einen von ihm geschätzten Durchschnittsenergieverbrauch (AE, AE') eines einzelnen Netzknotens (P1, P2, ..., P8) im Kommunikationsnetz oder eine Größe, aus welcher der Durchschnittsenergieverbrauch (AE, AE') ableitbar ist, an die anderen Netzknoten (P1, P2, ..., P8) der vorgegebenen Anzahl übermittelt, wobei ein jeweiliger Netzknoten (P1, P2, ..., P8) der vorgegebenen Anzahl seinen geschätzten Durchschnittsenergieverbrauch (AE, AE') unter Berücksichtigung aller Durchschnittsenergieverbräuche (AE, AE') der Netzknoten (P1, P2, ..., P8) der vorgegebenen Anzahl aktualisiert und daraus einen aktualisierten geschätzten Gesamtenergieverbrauch der Vielzahl von Netzknoten (P1, P2, ..., P8) ermittelt;
   b) ein jeweiliger Netzknoten (P1, P2, ..., P8), dessen Energiebedarf sich um eine benötigte Energiemenge ($\Delta$x) erhöht, den von ihm geschätzten Gesamtenergieverbrauch (TE, TE') zuzüglich der benötigten Energiemenge ($\Delta$x) mit einem vorgegebenen Gesamtenergiebedarf (LC) der Vielzahl von Netzknoten (P1, P2, ..., P8) vergleicht und einen Bezug der benötigten Energiemenge ($\Delta$x) von einem Energiebereitsteller (EP) dann veranlasst, wenn sein geschätzter Gesamtenergieverbrauch (TE, TE') zuzüglich der benötigten Energiemenge ($\Delta$x) um zumindest einen vorbestimmten Schwellwert kleiner als der vorgegebene Gesamtenergiebedarf (LC) ist.

2. Verfahren nach Anspruch 1, bei dem im Falle, dass in Schritt b) der von dem jeweiligen Netzknoten (P1, P2, ..., P8) geschätzte Gesamtenergieverbrauch (TE, TE') zuzüglich der benötigten Energiemenge ($\Delta$x) nicht um zumindest den vorbestimmten Schwellwert kleiner als der vorgegebene Gesamtenergiebedarf (LC) ist, der jeweilige Netzknoten (P1, P2, ..., P8) nach einem vorbestimmten Zeitintervall den Schritt b) wiederholt.

3. Verfahren nach Anspruch 2, bei dem sich die Länge des vorbestimmten Zeitintervalls nach jeder Wiederholung des Schritts b) verlängert und insbesondere verdoppelt wird.

4. Verfahren nach Anspruch 2 oder 3, bei dem nach einer vorbestimmten Anzahl von Wiederholungen des Schritts b) der jeweilige Netzknoten (P1, P2, ..., P8) nicht mehr an dem Verfahren teilnimmt.

5. Verfahren nach einem der vorhergehenden Ansprüche, bei dem der vorgegebene Gesamtenergiebedarf (LC) durch ein Lastprofil gegeben ist, das den zeitlichen Verlauf der im Energienetz bereitzustellenden Gesamtenergie spezifiziert.

6. Verfahren nach einem der vorhergehenden Ansprüche, bei dem der aktualisierte Durchschnittsenergieverbrauch (AE, AE') für einen jeweiligen Netzknoten (P1, P2, ..., P8) der vorgegebenen Anzahl der arithmetische Mittelwert der Durchschnittsenergieverbräuche (AE, AE') aller Netzknoten (P1, P2, ..., P8) der vorgegebenen Anzahl ist.

7. Verfahren nach einem der vorhergehenden Ansprüche, bei dem ein jeweiliger Netzknoten (P1, P2, ..., P8) der vorgegebenen Anzahl eine von ihm geschätzte Gesamtanzahl (N, N') von Netzknoten (P1, P2, ..., P8) in dem Kommunikationsnetz oder eine Größe, aus der die geschätzte Gesamtanzahl (N, N') ableitbar ist, an die anderen Netzknoten (P1, P2, ..., P8) der vorgegebenen Anzahl übermittelt, wobei ein jeweiliger Netzknoten (P1, P2, ..., P8) der vorgegebenen Anzahl seine geschätzte Gesamtanzahl (TE, TE') unter Berücksichtigung aller Gesamtanzahlen (N, N') der Netzknoten (P1, P2, ..., P8) der vorgegebenen Anzahl aktualisiert und anschließend basierend auf einer Multiplikation des von ihm geschätzten und aktualisierten Durchschnittsenergieverbrauchs (AE, AE') mit der aktualisierten Gesamtanzahl (N, N') den geschätzten Gesamtenergieverbrauch (TE, TE') der Vielzahl von Netzknoten (P1, P2, ..., P8) aktualisiert.

8. Verfahren nach Anspruch 7, bei dem ein jeweiliger Netzknoten (P1, P2, ..., P8) der vorgegebenen Anzahl seine geschätzte Gesamtanzahl (N, N') von Netzknoten (P1, P2, ..., P8) oder den Reziprokwert seiner geschätzten Gesamtanzahl (N, N') von Netzknoten (P1, P2, ..., P8) an die anderen Netzknoten der vorgegebenen Anzahl übermittelt, wobei sich die aktualisierte Gesamtanzahl (TE, TE') von Netzknoten (P1, P2, ..., P8) für einen jeweiligen Netzknoten (P1, P2, ..., P8) der vorgegebenen Anzahl aus dem Reziprokwert der durch die vorgegebene Anzahl geteilten Summe der Reziprokwerte der geschätzten Gesamtanzahlen (N, N') aller Netzknoten (P1, P2, ..., P8) der vorgegebenen Anzahl ergibt.

9. Verfahren nach einem der vorhergehenden Ansprüche, bei dem dann, wenn ein jeweiliger Netzknoten (P1, P2, ..., P8) seinen Energieverbrauch beim Energiebereitsteller (EP) um eine Energiemenge reduziert, der jeweilige Netzknoten (P1, P2, ..., P8) seinen geschätzten Durchschnittsenergieverbrauch (AE, AE') um diese Energiemenge vermindert.

10. Verfahren nach einem der vorhergehenden Ansprüche, bei dem dann, wenn ein jeweiliger Netzknoten (P1, P2, ..., P8) einen Bezug einer benötigten Energiemenge ($\Delta x$) von dem Energiebereitsteller (EP) veranlasst, der jeweilige Netzknoten seinen geschätzten Durchschnittsenergieverbrauch (AE, AE') um die benötigte Energiemenge ($\Delta x$) heraufsetzt.

11. Verfahren nach einem der vorhergehenden Ansprüche, bei dem der vorbestimmte Schwellwert Null ist oder einem prozentualen Wert des vorgegebenen Gesamtenergiebedarfs (LC) entspricht.

12. Verfahren nach einem der vorhergehenden Ansprüche, bei dem die Energieverbraucher jeweils eine Energieverbrauchseinheit und/oder eine Gruppe von Energieverbrauchseinheiten umfassen, wobei zumindest ein Teil der Energieverbrauchseinheiten jeweils Klimaanlagen und/oder Verbrauchseinheiten zum Bezug von elektrischer Energie für Elektrofahrzeuge sind.

13. Verfahren nach einem der vorhergehenden Ansprüche, bei dem das Verfahren in einem Energienetz eingesetzt wird, in dem der Energiebereitsteller (EP) einen oder mehrere Energieerzeuger und/oder Energiezwischenhändler umfasst.

14. Energienetz mit einer Vielzahl von Energieverbrauchern, wobei die Energieverbraucher Netzknoten (P1, P2, ..., P8) eines dezentralen Kommunikationsnetzes aus einer Vielzahl von Netzknoten (P1, P2, ..., P8) darstellen, in dem die Energieverbraucher untereinander kommunizieren können, wobei die Netzknoten in dem Energienetz derart ausgestaltet sind, dass:

   a) die Netzknoten (P1, P2, ..., P8) jeweils basierend auf den Austausch von Informationen mit zumindest einem anderen Netzknoten (P1, P2, ..., P8) den Gesamtenergieverbrauch (TE, TE') der Vielzahl von Netzknoten (P1, P2, ..., P8) abschätzen,
   wobei der Austausch von Informationen jeweils zwischen einer vorgegebenen Anzahl von Netzknoten (P1, P2, ..., P8) erfolgt, indem ein jeweiliger Netzknoten (P1, P2, ..., P8) in vorbestimmten zeitlichen Abständen zumindest einen Netzknoten aus der Menge der ihm bekannten Netzknoten (P1, P2, ..., P8) zufällig auswählt, um basierend auf den Austausch von Informationen mit dem zumindest einen ausgewählten Netzknoten (P1, P2, ..., P8) den Gesamtenergieverbrauch (TE, TE') der Vielzahl von Netzknoten (P1, P2, ..., P8) abzuschätzen; wobei ein jeweiliger Netzknoten (P1, P2, ..., P8) der vorgegebenen Anzahl einen von ihm geschätzten Durchschnittsenergieverbrauch (AE, AE') eines einzelnen Netzknotens (P1, P2, ..., P8) im Kommunikationsnetz oder eine Größe, aus welcher der Durchschnittsenergieverbrauch (AE, AE') ableitbar ist, an die anderen Netzknoten (P1, P2, ..., P8) der vorgegebenen Anzahl übermittelt, wobei ein jeweiliger Netzknoten (P1, P2, ..., P8) der vorgegebenen Anzahl seinen geschätzten Durchschnittsenergieverbrauch (AE, AE') unter Berücksichtigung aller Durchschnittsenergieverbräuche (AE, AE') der Netzknoten (P1, P2, ..., P8) der vorgegebenen Anzahl aktualisiert und daraus einen aktualisierten geschätzten Gesamtenergieverbrauch der Vielzahl von Netzknoten (P1, P2, ..., P8) ermittelt;

b) ein jeweiliger Netzknoten (P1, P2, ..., P8), dessen Energiebedarf sich um eine benötigte Energiemenge ($\Delta$x) erhöht, den von ihm geschätzten Gesamtenergieverbrauch (TE, TE') zuzüglich der benötigten Energiemenge ($\Delta$x) mit einem vorgegebenen Gesamtenergiebedarf (LC) der Vielzahl von Netzknoten (P1, P2, ..., P8) vergleicht und einen Bezug der benötigten Energiemenge ($\Delta$x) von einem Energiebereitsteller (EP) dann veranlasst, wenn sein geschätzter Gesamtenergieverbrauch (TE, TE') zuzüglich der benötigten Energiemenge ($\Delta$x) um zumindest einen vorbestimmten Schwellwert kleiner als der vorgegebene Gesamtenergiebedarf (LC) ist.

15. Netzknoten zur Verwendung in einem Energienetz nach Anspruch 14, der ein Netzknoten (P1, P2, ..., P8) eines dezentralen Kommunikationsnetzes aus einer Vielzahl Netzknoten (P1, P2, ..., P8) ist, in dem die Netzknoten derart ausgestaltet sind, dass diese untereinander kommunizieren können, wobei der Netzknoten bei Betrieb in dem Energienetz derart ausgestaltet ist, dass:

a) der Netzknoten (P1, P2, ..., P8) basierend auf den Austausch von Informationen mit zumindest einem anderen Netzknoten (P1, P2, ..., P8) den Gesamtenergieverbrauch (TE, TE') der Vielzahl von Netzknoten (P1, P2, ..., P8) abschätzt,

wobei der Austausch von Informationen zwischen einer vorgegebenen Anzahl von Netzknoten (P1, P2, ..., P8) erfolgt, indem der Netzknoten (P1, P2, ..., P8) in vorbestimmten zeitlichen Abständen zumindest einen Netzknoten aus der Menge der ihm bekannten Netzknoten (P1, P2, ..., P8) zufällig auswählt, um basierend auf den Austausch von Informationen mit dem zumindest einen ausgewählten Netzknoten (P1, P2, ..., P8) den Gesamtenergieverbrauch (TE, TE') der Vielzahl von Netzknoten (P1, P2, ..., P8) abzuschätzen;

wobei der Netzknoten (P1, P2, ..., P8) einen von ihm geschätzten Durchschnittsenergieverbrauch (AE, AE') eines einzelnen Netzknotens (P1, P2, ..., P8) im Kommunikationsnetz oder eine Größe, aus welcher der Durchschnittsenergieverbrauch (AE, AE') ableitbar ist, an die anderen Netzknoten (P1, P2, ..., P8) der vorgegebenen Anzahl übermittelt, wobei der Netzknoten (P1, P2, ..., P8) der vorgegebenen Anzahl seinen geschätzten Durchschnittsenergieverbrauch (AE, AE') unter Berücksichtigung aller Durchschnittsenergieverbräuche (AE, AE') der Netzknoten (P1, P2, ..., P8) der vorgegebenen Anzahl aktualisiert und daraus einen aktualisierten geschätzten Gesamtenergieverbrauch der Vielzahl von Netzknoten (P1, P2, ..., P8) ermittelt;

b) falls sich der Energiebedarf des Netzknotens (P1, P2, ..., P8) um eine benötigte Energiemenge ($\Delta$x) erhöht, er den von ihm geschätzten Gesamtenergieverbrauch (TE, TE') zuzüglich der benötigten Energiemenge ($\Delta$x) mit einem vorgegebenen Gesamtenergiebedarf (LC) der Vielzahl von Netzknoten (P1, P2, ..., P8) vergleicht und einen Bezug der benötigten Energiemenge ($\Delta$x) von einem Energiebereitsteller (EP) dann veranlasst, wenn sein geschätzter Gesamtenergieverbrauch (TE, TE') zuzüglich der benötigten Energiemenge ($\Delta$x) um zumindest einen vorbestimmten Schwellwert kleiner als der vorgegebene Gesamtenergiebedarf (LC) ist.

## Claims

1. Method for computer-aided control of the electrical power consumption of a plurality of power consumers in an electrical power grid, wherein the power consumers represent network nodes (P1, P2, ..., P8) of a distributed communication network made up of a plurality of network nodes (P1, P2, ..., P8), in which the power consumers can communicate with each other, wherein:

a) the network nodes (P1, P2,..., P8) each estimate the total power consumption (TE, TE') of the plurality of network nodes (P1, P2,..., P8) on the basis of the exchange of information with at least one other network node (P1, P2,..., P8),

wherein the exchange of information takes place in each case between a predefined number of network nodes (P1, P2, ..., P8), in that at predetermined intervals of time each network node (P1, P2,..., P8) selects at least one network node at random from the set of network nodes (P1, P2,..., P8) known to it in order to estimate the total power consumption (TE, TE') of the plurality of network nodes (P1, P2,..., P8) on the basis of the exchange of information with the at least one selected network node (P1, P2,..., P8) ;

wherein each network node (P1, P2,..., P8) of the predefined number transmits an average power consumption (AE, AE') estimated by it of an individual network node (P1, P2,..., P8) in the communication network, or a variable from which the average power consumption (AE, AE') can be deduced, to the other network nodes (P1, P2,..., P8) of the predefined number, wherein each network node (P1, P2,..., P8) of the predefined number updates its estimated average power consumption (AE, AE') taking into consideration all average power consumptions (AE, AE') of the network nodes (P1, P2,..., P8) of the predefined number and from this determines an updated estimated total power consumption of the plurality of network nodes (P1, P2,..., P8);

b) each network node (P1, P2, ..., P8), the power demand of which increases by a required amount of power ($\Delta$x), compares the total power demand (TE, TE') estimated by it plus the required amount of power ($\Delta$x) to a predefined total power demand (LC) of the plurality of network nodes (P1, P2, ..., P8) and initiates a procurement of the required amount of power ($\Delta$x) from a power provider (EP) if its estimated total power consumption (TE, TE') plus the required amount of power ($\Delta$x) is less than the predefined total power demand (LC) by at least a predetermined threshold value.

2. Method according to claim 1, in which in the event that in step b) the total power consumption (TE, TE') estimated by each network node (P1, P2, ..., P8) plus the required amount of power ($\Delta$x) is not less than the predefined total power demand (LC) by at least the predetermined threshold value, each network node (P1, P2, ..., P8) repeats step b) after a predetermined interval of time.

3. Method according to claim 2, in which the length of the predetermined interval of time is extended and in particular is doubled after each repetition of step b).

4. Method according to claim 2 or 3, in which after a predetermined number of repetitions of step b) each network node (P1, P2, ..., P8) no longer takes part in the method.

5. Method according to one of the preceding claims, in which the predefined total power demand (LC) is provided by a load profile which specifies the chronological sequence of the total power to be provided in the electrical power grid.

6. Method according to one of the preceding claims, in which the updated average power consumption (AE, AE') for each network node (P1, P2, ..., P8) of the predefined number is the arithmetic mean of the average power consumptions (AE, AE') of all network nodes (P1, P2, ..., P8) of the predefined number.

7. Method according to one of the preceding claims, in which each network node (P1, P2, ..., P8) of the predefined number transmits a total number (N, N') estimated by it of network nodes (P1, P2, ..., P8) in the communication network, or a variable from which the estimated total number (N, N') can be deduced, to the other network nodes (P1, P2, ..., P8) of the predefined number, wherein each network node (P1, P2, ..., P8) of the predefined number updates its estimated total number (TE, TE') taking into account all total numbers (N, N') of the network nodes (P1, P2, ..., P8) of the predefined number and then on the basis of a multiplication of the average power consumption (AE, AE') estimated and updated by it by the updated total number (N, N') updates the estimated total power consumption (TE, TE') of the plurality of network nodes (P1, P2, ..., P8).

8. Method according to claim 7, in which each network node (P1, P2, ..., P8) of the predefined number transmits its estimated total number (N, N') of network nodes (P1, P2, ..., P8) or the reciprocal value of its estimated total number (N, N') of network nodes (P1, P2, ..., P8) to the other network nodes of the predefined number, wherein the updated total number (TE, TE') of network nodes (P1, P2, ..., P8) for each network node (P1, P2, ..., P8) of the predefined number is produced from the reciprocal value of the total of the reciprocal values of the estimated total numbers (N, N') of all network nodes (P1, P2, ..., P8) of the predefined number divided by the predefined number.

9. Method according to one of the preceding claims, in which when a respective network node (P1, P2, ..., P8) reduces its power consumption with the power provider (EP) by an amount of power, the respective network node (P1, P2, ..., P8) reduces its estimated average power consumption (AE, AE') by this amount of power.

10. Method according to one of the preceding claims, in which when a respective network node (P1, P2, ..., P8) initiates a procurement of a required amount of power ($\Delta$x) from the power provider (EP), the respective network node increases its estimated average power consumption (AE, AE') by the required amount of power ($\Delta$x).

11. Method according to one of the preceding claims, in which the predetermined threshold value is zero or corresponds to a percentage value of the predefined total power demand (LC).

12. Method according to one of the preceding claims, in which the power consumers each comprise a power consumption unit and/or a group of power consumption units, wherein at least some of the power consumption units are in each case air conditioning installations and/or consumption units for the procurement of electrical power for electric vehicles.

13. Method according to one of the preceding claims, in which the method is used in an electrical power grid in which the power provider (EP) comprises one or more power generators and/or power distributors.

14. Electrical power grid with a plurality of power consumers, wherein the power consumers represent network nodes (P1, P2, ..., P8) of a distributed communication network made up of a plurality of network nodes (P1, P2, ..., P8), in which the power consumers can communicate with each other, wherein the network nodes in the electrical power grid are configured such that:

a) the network nodes (P1, P2, ..., P8) each on the basis of the exchange of information with at least one other network node (P1, P2, ..., P8) estimate the total power consumption (TE, TE') of the plurality of network nodes (P1, P2, ..., P8),
wherein the exchange of information takes place in each case between a predefined number of network nodes (P1, P2, ..., P8), in that at predetermined intervals of time each network node (P1, P2,..., P8) selects at least one network node at random from the set of network nodes (P1, P2,..., P8) known to it in order to estimate the total power consumption (TE, TE') of the plurality of network nodes (P1, P2,..., P8) on the basis of the exchange of information with the at least one selected network node (P1, P2,..., P8) ;
wherein each network node (P1, P2,..., P8) of the predefined number transmits an average power consumption (AE, AE') estimated by it of an individual network node (P1, P2,..., P8) in the communication network, or a variable from which the average power consumption (AE, AE') can be deduced, to the other network nodes (P1, P2,..., P8) of the predefined number, wherein each network node (P1, P2,..., P8) of the predefined number updates its estimated average power consumption (AE, AE') taking into consideration all average power consumptions (AE, AE') of the network nodes (P1, P2,..., P8) of the predefined number and from this determines an updated estimated total power consumption of the plurality of network nodes (P1, P2,..., P8);
b) each network node (P1, P2, ..., P8), the power demand of which increases by a required amount of power ($\Delta x$), compares the total power consumption (TE, TE') estimated by it plus the required amount of power ($\Delta x$) to a predefined total power demand (LC) of the plurality of network nodes (P1, P2, ..., P8) and initiates a procurement of the required amount of power ($\Delta x$) from a power provider (EP) if its estimated total power consumption (TE, TE') plus the required amount of power ($\Delta x$) is less than the predefined total power demand (LC) by at least a predetermined threshold value.

15. Network node for use in an electrical power grid according to claim 14, which is a network node (P1, P2, ..., P8) of a distributed communication network made up of a plurality of network nodes (P1, P2, ..., P8), in which the network nodes are configured such that they can communicate with each other, wherein during operation in the electrical power grid the network nodes are configured such that:

a) the network nodes (P1, P2, ..., P8) estimate the total power consumption (TE, TE') of the plurality of network nodes (P1, P2, ..., P8) on the basis of the exchange of information with at least one other network node (P1, P2, ..., P8),
wherein the exchange of information takes place between a predefined number of network nodes (P1, P2, ..., P8), in that at predetermined intervals of time the network node (P1, P2,..., P8) selects at least one network node at random from the set of network nodes (P1, P2,..., P8) known to it in order to estimate the total power consumption (TE, TE') of the plurality of network nodes (P1, P2,..., P8) on the basis of the exchange of information with the at least one selected network node (P1, P2,..., P8);
wherein the network node (P1, P2,..., P8) transmits an average power consumption (AE, AE') estimated by it of an individual network node (P1, P2,..., P8) in the communication network, or a variable from which the average power consumption (AE, AE') can be deduced, to the other network nodes (P1, P2,..., P8) of the predefined number, wherein the network node (P1, P2,..., P8) of the predefined number updates its estimated average power consumption (AE, AE') taking into consideration all average power consumptions (AE, AE') of the network nodes (P1, P2,..., P8) of the predefined number and from this determines an updated estimated total power consumption of the plurality of network nodes (P1, P2,..., P8) ;
b) if the power demand of the network node (P1, P2, ..., P8) increases by a required amount of power ($\Delta x$), it compares the total power consumption (TE, TE') estimated by it plus the required amount of power ($\Delta x$) to a predefined total power demand (LC) of the plurality of network nodes (P1, P2, ..., P8) and initiates a procurement of the required amount of power ($\Delta x$) from a power provider (EP) if its estimated total power consumption (TE, TE') plus the required amount of power ($\Delta x$) is less than the predefined total power demand (LC) by at least a predetermined threshold value.

**Revendications**

1. Procédé de commande assistée par ordinateur de la consommation d'électricité d'une pluralité de consommateurs d'électricité dans un réseau d'énergie électrique, les consommateurs d'électricité étant des noeuds de réseau (P1, P2, ... , P8) d'un réseau de communication décentralisé composé d'une pluralité de noeuds de réseau (P1, P2, ... , P8) dans lequel les consommateurs d'électricité peuvent communiquer entre eux,

   a) les noeuds de réseau (P1, P2, ... , P8) estimant, respectivement sur la base de l'échange d'informations avec au moins un autre noeud de réseau (P1, P2, ... , P8) la consommation d'énergie totale (TE, TE') de la pluralité de noeuds de réseau (P1, P2, ... , P8), l'échange d'informations ayant lieu respectivement entre un nombre donné de noeuds de réseau (P1, P2, ... , P8) par sélection aléatoire, par un noeud de réseau respectif (P1, P2, ... , P8), à intervalles de temps prédéterminés, d'au moins un noeud de réseau d'un ensemble des noeuds de réseau (P1, P2, ... , P8) connus de lui-même pour estimer, sur la base de l'échange d'informations avec l'au moins un noeud de réseau sélectionné (P1, P2, ... , P8), la consommation d'énergie totale (TE, TE') de la pluralité de noeuds de réseau (P1, P2, ... , P8), un noeud de réseau respectif (P1, P2, ... , P8) du nombre donné transmettant aux autres noeuds de réseau (P1, P2, ..., P8) du nombre donné une consommation d'énergie moyenne (AE, AE') estimée par lui-même d'un noeud de réseau individuel (P1, P2, ... , P8) dans le réseau de communication ou une grandeur dont peut être déduite la consommation d'énergie moyenne (AE, AE'), un noeud de réseau respectif (P1, P2, ... , P8) du nombre donné actualisant sa consommation d'énergie moyenne estimée (AE, AE') compte tenu de toutes les consommations d'énergie moyennes (AE, AE') des noeuds de réseau (P1, P2, ..., P8) du nombre donné et établissant sur cette base une consommation d'énergie totale estimée actualisée de la pluralité de noeuds de réseau (P1, P2, ... , P8) ;
   b) un noeud de réseau respectif (P1, P2, ... , P8) dont le besoin en énergie augmente d'une quantité d'énergie requise ($\Delta$x) comparant la consommation d'énergie totale (TE, TE') estimée par lui-même et majorée de la quantité d'énergie requise ($\Delta$x) avec un besoin total en énergie donné (LC) de la pluralité de noeuds de réseau (P1, P2, ..., P8) et faisant prélever la quantité d'énergie requise ($\Delta$x) d'un fournisseur d'énergie (EP) lorsque sa consommation d'énergie totale estimée (TE, TE') majorée de la quantité d'énergie requise ($\Delta$x) est inférieure d'au moins une valeur seuil prédéterminée au besoin total en énergie donné (LC).

2. Procédé selon la revendication 1, dans lequel, le noeud de réseau respectif (P1, P2, ... , P8) répète l'étape b) après un intervalle de temps prédéterminé lorsque, à l'étape b), la consommation d'énergie totale (TE, TE') estimée par le noeud de réseau (P1, P2, ... , P8) respectif et majorée de la quantité d'énergie requise ($\Delta$x) n'est pas inférieure d'au moins une valeur seuil prédéterminée au besoin total en énergie donné (LC).

3. Procédé selon la revendication 2, dans lequel la longueur de l'intervalle de temps prédéterminé se prolonge après chaque répétition de l'étape b) et passe plus particulièrement au double.

4. Procédé selon la revendication 2 ou 3, dans lequel le noeud de réseau respectif (P1, P2, ... , P8) ne participe plus au procédé après un nombre prédéterminé de répétitions de l'étape b).

5. Procédé selon l'une des revendications précédentes, dans lequel le besoin total en énergie donné (LC) est donné par un profil de charge qui spécifie l'évolution temporelle de l'énergie totale à fournir dans le réseau d'énergie.

6. Procédé selon l'une des revendications précédentes, dans lequel la consommation d'énergie moyenne actualisée (AE, AE') est, pour un noeud de réseau respectif (P1, P2, ... , P8), du nombre donné, la moyenne arithmétique des consommations d'énergie moyennes (AE, AE') de tous les noeuds de réseau (P1, P2, ... , P8) du nombre donné.

7. Procédé selon l'une des revendications précédentes, dans lequel un noeud de réseau respectif (P1, P2, ... , P8) du nombre donné transmet aux autres noeuds de réseau (P1, P2, ..., P8) du nombre donné un nombre total (N, N'), estimé par lui-même, de noeuds de réseau (P1, P2, ... , P8) dans le réseau de communication ou une grandeur dont peut être déduit le nombre total estimé (N, N'), un noeud de réseau respectif (P1, P2, ... , P8) du nombre donné actualisant son nombre total estimé (TE, TE') compte tenu de tous les nombres totaux (N, N') de noeuds de réseau (P1, P2, ... , P8) du nombre donné et actualisant ensuite, sur la base d'une multiplication de la consommation d'énergie moyennes (AE, AE') estimée par lui-même et actualisée (AE, AE') par le nombre total actualisé (N, N'), la consommation d'énergie totale estimée (TE, TE') de la pluralité de noeuds de réseau (P1, P2, ... , P8).

8. Procédé selon la revendication 7, dans lequel un noeud de réseau respectif (P1, P2, ... , P8) du nombre donné transmet aux autres noeuds de réseau du nombre donné son nombre total estimé (N, N') de noeuds de réseau (P1, P2, ..., P8) ou la valeur réciproque de son nombre total estimé (N, N') de noeuds de réseau (P1, P2, ... , P8), le nombre total actualisé (TE, TE') de noeuds de réseau (P1, P2, ... , P8) résultant, pour un noeud de réseau respectif (P1, P2, ... , P8) du nombre donné, de la valeur réciproque de la somme des valeurs réciproques du nombre total estimé (N, N') de tous les noeuds de réseau (P1, P2, ..., P8) du nombre donné divisée par le nombre donné.

9. Procédé selon l'une des revendications précédentes, dans lequel, lorsqu'un noeud de réseau respectif (P1, P2, ... , P8) réduit d'une quantité d'énergie sa consommation d'énergie auprès du fournisseur d'énergie (EP), le noeud de réseau respectif (P1, P2, ... , P8) réduit de cette quantité d'énergie sa consommation d'énergie moyenne estimée (AE, AE').

10. Procédé selon l'une des revendications précédentes, dans lequel, lorsqu'un noeud de réseau respectif (P1, P2, ... , P8) fait prélever une quantité d'énergie requise ($\Delta$x) au fournisseur d'énergie (EP), le noeud de réseau respectif augmente de la quantité d'énergie requise ($\Delta$x) sa consommation d'énergie moyenne estimée (AE, AE').

11. Procédé selon l'une des revendications précédentes, dans lequel la valeur seuil prédéterminée est nulle ou correspond à un pourcentage du besoin total en énergie donné (LC).

12. Procédé selon l'une des revendications précédentes, dans lequel les consommateurs d'électricité comprennent respectivement une unité de consommation d'énergie et/ou un groupe d'unités de consommation d'énergie, au moins une partie des unités de consommation d'énergie étant respectivement des installations de climatisation et/ou des unités de consommation pour le prélèvement d'énergie électrique pour des véhicules électriques.

13. Procédé selon l'une des revendications précédentes, dans lequel le procédé est mis en oeuvre dans un réseau d'énergie dans lequel le fournisseur d'énergie (EP) comprend un ou plusieurs producteurs d'énergie et/ou des intermédiaires d'énergie.

14. Réseau d'énergie comportant une pluralité de consommateurs d'électricité, les consommateurs d'électricité étant des noeuds de réseau (P1, P2, ... , P8) d'un réseau de communication décentralisé composé d'une pluralité de noeuds de réseau (P1, P2, ... , P8), dans lequel les consommateurs d'électricité peuvent communiquer entre eux, les noeuds de réseau du réseau d'énergie étant réalisés de telle sorte que :

a) les noeuds de réseau (P1, P2, ... , P8) estiment respectivement, sur la base de l'échange d'informations avec au moins un autre noeud de réseau (P1, P2, ... , P8), la consommation d'énergie totale (TE, TE') de la pluralité de noeuds de réseau (P1, P2, ..., P8), l'échange d'informations ayant lieu respectivement entre un nombre donné de noeuds de réseau (P1, P2, ... , P8) par sélection aléatoire, par un noeud de réseau respectif (P1, P2, ... , P8), à intervalles de temps prédéterminés, d'au moins un noeud de réseau d'un ensemble des noeuds de réseau (P1, P2, ..., P8) connus de lui-même pour estimer, sur la base de l'échange d'informations avec l'au moins un noeud de réseau sélectionné (P1, P2, ... , P8), la consommation d'énergie totale (TE, TE') de la pluralité de noeuds de réseau (P1, P2, ... , P8),
un noeud de réseau respectif (P1, P2, ... , P8) du nombre donné transmettant aux autres noeuds de réseau (P1, P2, ... , P8) du nombre donné une consommation d'énergie moyenne (AE, AE') estimée par lui-même d'un noeud de réseau individuel (P1, P2, ... , P8) dans le réseau de communication ou une grandeur dont peut être déduite la consommation d'énergie moyenne (AE, AE'), un noeud de réseau respectif (P1, P2, ... , P8) du nombre donné actualisant sa consommation d'énergie moyenne estimée (AE, AE') compte tenu de toutes les consommations d'énergie moyennes (AE, AE') des noeuds de réseau (P1, P2, ... , P8) du nombre donné et établissant sur cette base une consommation d'énergie totale estimée actualisée de la pluralité de noeuds de réseau (P1, P2, ... , P8) ;
b) un noeud de réseau respectif (P1, P2, ... , P8) dont le besoin en énergie augmente d'une quantité d'énergie requise ($\Delta$x) compare la consommation d'énergie totale (TE, TE') estimée par lui-même et majorée de la quantité d'énergie requise ($\Delta$x) avec un besoin total en énergie donné (LC) de la pluralité de noeuds de réseau (P1, P2, ... , P8) et fait prélever la quantité d'énergie requise ($\Delta$x) d'un fournisseur d'énergie (EP) lorsque sa consommation d'énergie totale estimée (TE, TE') majorée de la quantité d'énergie requise ($\Delta$x) est inférieure d'au moins une valeur seuil prédéterminée au besoin total en énergie donné (LC).

15. Noeud de réseau destiné à être utilisé dans un réseau d'énergie selon la revendication 14, lequel est un noeud de réseau (P1, P2, ... , P8) d'un réseau de communication décentralisé composé d'une pluralité de noeuds de réseau (P1, P2, ... , P8), dans lequel les noeuds de réseau sont réalisés de telle sorte qu'ils peuvent communiquer entre eux, le noeud de réseau, lorsqu'il fonctionne dans le réseau d'énergie, étant réalisé de telle sorte que :

a) le noeud de réseau (P1, P2, ... , P8) estime, sur la base de l'échange d'informations avec au moins un autre noeud de réseau (P1, P2, ... , P8), la consommation d'énergie totale (TE, TE') de la pluralité de noeuds de réseau (P1, P2, ... , P8), l'échange d'informations entre un nombre donné de noeuds de réseau (P1, P2, ... , P8) ayant lieu par sélection aléatoire, par le noeud de réseau (P1, P2, ... , P8), à intervalles de temps prédéterminés, d'au moins un noeud de réseau de l'ensemble des noeuds de réseau (P1, P2, ... , P8) connus de lui-même pour estimer, sur la base de l'échange d'informations avec l'au moins un noeud de réseau sélectionné (P1, P2, ... , P8), la consommation d'énergie totale (TE, TE') de la pluralité de noeuds de réseau (P1, P2, ... , P8), le noeud de réseau (P1, P2, ... , P8) transmettant aux autres noeuds de réseau (P1, P2, ... , P8) du nombre donné une consommation d'énergie moyenne (AE, AE') estimée par lui-même d'un noeud de réseau individuel (P1, P2, ... , P8) dans le réseau de communication ou une grandeur dont peut être déduite la consommation d'énergie moyenne (AE, AE'), le noeud de réseau (P1, P2, ..., P8) du nombre donné actualisant sa consommation d'énergie moyenne estimée (AE, AE') compte tenu de toutes les consommations d'énergie moyennes (AE, AE') des noeuds de réseau (P1, P2, ... , P8) du nombre donné et établissant sur cette base une consommation d'énergie totale estimée actualisée de la pluralité de noeuds de réseau (P1, P2, ... , P8) ;

b) si le besoin en énergie du noeud de réseau (P1, P2, ... , P8) augmente d'une quantité d'énergie requise ($\Delta x$), il compare la consommation d'énergie totale (TE, TE') estimée par lui-même et majorée de la quantité d'énergie requise ($\Delta x$) avec un besoin total en énergie donné (LC) de la pluralité de noeuds de réseau (P1, P2, ..., P8) et fait prélever la quantité d'énergie requise ($\Delta x$) d'un fournisseur d'énergie (EP) lorsque sa consommation d'énergie totale estimée (TE, TE') majorée de la quantité d'énergie requise ($\Delta x$) est inférieure d'au moins une valeur seuil prédéterminée au besoin total en énergie donné (LC).

# FIG 1

EP

Δx

P1

P2

P8, TE', AE', N'

P5

P3

AE, AE', 1/N, 1/N'

P4

P7, TE, AE, N

P6

## FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AU 2004229818 A1
- US 2009089595 A1
- US 2008313188 A1

**In der Beschreibung aufgeführte Nicht-Patentliteratur**

- Bottom-Up Self-Organization of Unpredictable Demand and Supply under Decentralized Power Management. **HORST F. WEDDE et al.** Self-Adaptive and Self-Organizing Systems, 2008. SASO '08. SECOND IEEE INTERNATIONAL CONFERENCE ON. IEEE, 20. Oktober 2008, 74-83
- A Robust Semantic Overlay Network for Microgrid Control Applications. **GEERT DECONINCK et al.** Architecting Dependable Systems V, LNCS. Springer Verlag, 26. September 2008, vol. 5135, 101-123